# EUROPEAN PATENT SPECIFICATION

(11) **EP 1 939 060 B1**
(45) Date of publication and mention of the grant of the patent: **21.03.2012**
(21) Application number: 07254741.7
(22) Date of filing: 07.12.2007
(51) Int. Cl.: B60W 30/14

(54) **Control device for vehicle**
Steuervorrichtung für ein Fahrzeug
Dispositif de commande pour véhicule

(30) Priority: 26.12.2006 JP 2006349988
(43) Date of publication of application: 02.07.2008
(73) Proprietor: Toyota Jidosha Kabushiki Kaisha, Aichi-ken, 471-8571 (JP)
(72) Inventor: Saitoh, Hidenori c/o Toyota Jidosha K.K., Aichi-ken 471-8571 (JP); Kobayashi, Kiyoshi c/o Toyota Jidosha K.K., Aichi-ken 471-8571 (JP); Owatari, Masakazu c/o Toyota Jidosha K.K., Aichi-ken 471-8571 (JP); Kaigawa, Masato c/o Toyota Jidosha K.K., Aichi-ken 471-8571 (JP)
(74) Representative: Harris, Ian Richard

(56) References cited:
- DE-A1- 10 347 844
- US-A1- 2004 182 620
- US-A1- 2005 167 175
- US-B1- 6 675 923

## Description

This nonprovisional application is based on Japanese Patent Application No. 2006-349988 filed with the Japan Patent Office on December 26, 2006, the entire contents of which are hereby incorporated by reference.

### BACKGROUND OF THE INVENTION

### Field of the Invention

The present invention relates to a control device for a vehicle, and more particularly to a control technique for keeping a vehicle speed at a vehicle speed limit set by a driver or lower.

### Description of the Background Art

For the purpose of preventing traffic accidents resulting from overspeed, vehicles equipped with a speed limitation function called ASL (Adjustable Speed Limitation) have been put in practice. ASL is a system for limiting a vehicle speed by limiting the throttle opening degree of an engine according to the relation between a current vehicle speed and a vehicle speed limit arbitrarily set by a driver so that the set vehicle speed limit is not exceeded even when the driver depresses the accelerator pedal hard.

A driver sets (enables) ASL when he or she thinks that vehicle speed limitation is necessary. However, even during ASL is set, there may arise need for traveling at a speed exceeding the vehicle speed limit, for example, when the driver gives way to emergency vehicles or avoids hazard. Therefore, it is desirable to provide a configuration that allows the ASL setting to be cancelled with a relatively easy operation.

As an example of such the ASL setting cancellation method, Japanese Patent Laying-Open No. 04-306136 discloses a vehicle maximum speed control method in which when a pedal for operating a motive power level is depressed by a prescribed amount or greater, the operation amount in an operation amount adjusting apparatus is left increased toward the original position by a signal caused by the depression. In other words, when a driver depresses a pedal (accelerator pedal) by a prescribed amount or greater, the ASL setting is cancelled.

Furthermore, EP 1057684 B1 discloses a configuration that allows a speed control system to be inoperative at a particular accelerator pedal position, for example, a kick down position at which the accelerator pedal is depressed fully.

However, in the configurations disclosed in Japanese Patent Laying-Open No. 04-306136 and EP 1057684 B1, the accelerator pedal has to be depressed relatively hard in order to cancel the ASL setting. Therefore, with cancellation of the ASL setting, the limited throttle opening rapidly increases up to the value corresponding to the accelerator pedal as depressed hard. As a result, in a vehicle having a relatively large engine capacity, in particular, the driving force is generated more than expected by the driver, and acceleration against the driver's intention may occur.

US2004/182620 discloses a method and arrangement for controlling the speed of a vehicle in response to environmental conditions. According to US2004/182620 environmental conditions are determined and a maximum permissible speed is determined based on the environmental conditions and the vehicle speed is controlled accordingly.

US 6 675 923 discloses a device for operating an automatic cruise control of a vehicle comprising means to separate the travel of the accelerator into two parts. The arrangement is applied in conjunction with a determination of the speed and/or distance of a an obstacle from a vehicle.

US2005/0167175 discloses a cruise control system for a vehicle including a speed sensor an accelerator sensor, and a speed controller. US2005/0167175 is concerned with the control of the speed of a vehicle in a cruise control mode of operation.

DE 103 47 844 discloses a dynamic switching method for a automobile velocity controller, wherein the operation of a cruise control mode of the vehicle is dependent on the operation of the accelerator pedal so as to control the longitudinal velocity of the vehicle.

### SUMMARY OF THE INVENTION

The present invention is made to solve such a problem, and an object of the present invention is to provide a control device in a vehicle having a mode for keeping a vehicle speed at a vehicle speed limit set by a driver or lower to allow the mode to be cancelled more safely.

A control device in accordance with an aspect of the present invention is directed to a vehicle including a driving force source that can produce a driving force in response to a command value from the control device. The control device includes: operation amount obtaining means for obtaining an accelerator operation amount by a driver; command value generation means for generating the command value according to the accelerator operation amount obtained by the operation amount obtaining means; limitation means for determining a limit value which is a maximum value of the command value at which a vehicle speed of the vehicle can be kept at a vehicle speed limit set by the driver or lower, and limiting the command value applied to the driving force source so as not to exceed the limit value; variation amount obtaining means for obtaining a temporal variation amount of the accelerator operation amount obtained by the operation amount obtaining means; and disabling means for disabling the limitation means based on the temporal variation amount of the accelerator operation amount obtained by the variation amount obtaining means.

According to the present invention, while the limitation means limits a command value generated according to an accelerator operation amount by the driver so as not to exceed a limit value, it is determined whether to disable the limitation means, based on the temporal variation amount of the accelerator operation amount by the driver. Therefore, the driver can disable the limitation means only by performing an accelerator operation at a prescribed rate, so that it is not necessary to depress the accelerator more than necessary. Thus, production of an excessive driving force in disabling the limitation means can be avoided, thereby cancelling the vehicle speed limit more safely.

Preferably, the disabling means disables the limitation means when the temporal variation amount of the accelerator operation amount exceeds a predetermined first prescribed value.

More preferably, the disabling means disables the limitation means when the accelerator operation amount exceeds a predetermined second prescribed value, in addition to the temporal variation amount exceeding the first prescribed value.

Preferably, the control device further includes re-enabling means for enabling the limitation means again after the limitation means is disabled by the disabling means.

More preferably, the re-enabling means enables the limitation means again after a predetermined prescribed time has passed since the limitation means was disabled by the disabling means.

More preferably, the re-enabling means enables the limitation means again after the vehicle travels a predetermined prescribed distance after the limitation means is disabled by the disabling means.

Preferably, the vehicle further includes a transmission arranged in a motive power transmission path from the driving force source for transmitting a driving force through one gear step selected from a plurality of gear steps. The control device in accordance with this aspect further includes transmission control means for performing transmission control for selecting a gear step in the transmission, at least based on the accelerator operation amount. Then, the transmission control means is configured to perform rapid opening control of shifting a gear step selected at present to a gear step with a larger reduction gear ratio in response to an increase of the accelerator operation amount, and is configured to stop execution of the rapid opening control in a period of time at least including a point of time when the disabling means disables the limitation means.

According to the present invention, in a vehicle having a mode for keeping a vehicle speed at a vehicle speed limit set by the driver or lower, a control device which allows the mode to be canceled more safely can be realized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic configuration diagram showing a vehicle equipped with a control device in accordance with an embodiment of the present invention.
Fig. 2 is a functional block diagram showing a control structure in the control device in accordance with the embodiment of the present invention.
Fig. 3 is a more detailed functional block diagram of a transmission control portion.
Fig. 4 is a schematic configuration diagram showing a control device in accordance with a prior art.
Fig. 5 is a time waveform diagram showing an ASL setting cancellation operation in accordance with a prior art.
Fig. 6 is a time waveform diagram showing an ASL setting cancellation operation in accordance with the embodiment of the present invention.
Fig. 7 is a flowchart concerning the ASL setting cancellation operation in accordance with the embodiment of the present invention.
Fig. 8 is a functional block diagram showing a control structure in a control device in accordance with a first modification of the embodiment of the present invention.
Fig. 9 is a functional block diagram showing a control structure in a control device in accordance with a second modification of the embodiment of the present invention.

### DESCRIPTION OF THE PREFERRED EMBODIMENTS

An embodiment of the present invention will be described in detail with reference to the figures. It is noted that the same or corresponding parts in the figures will be denoted with the same reference characters and the description thereof will not be repeated.

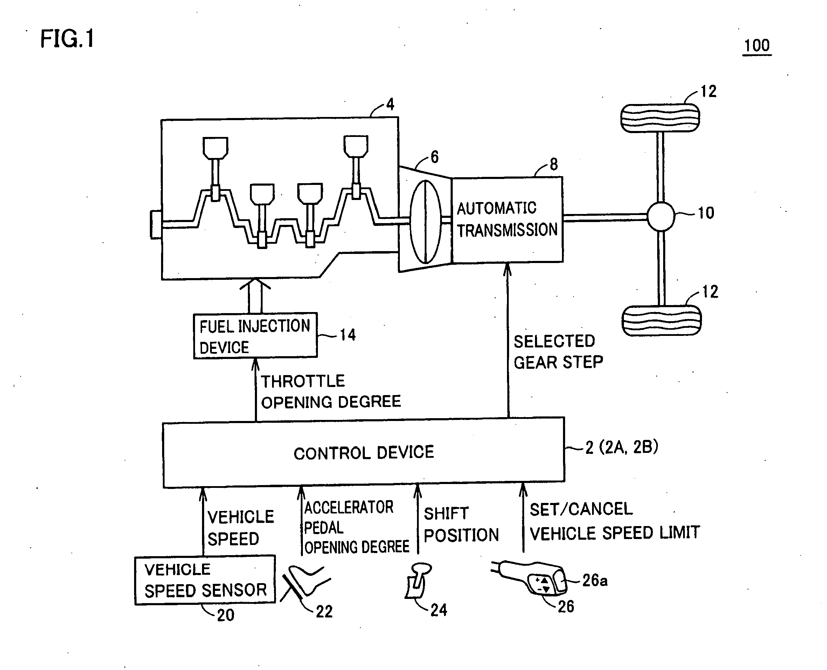

Fig. 1 is a schematic configuration diagram showing a vehicle 100 equipped with a control device in accordance with an embodiment of the present invention.

Referring to Fig. 1, vehicle 100 is an automobile having an ASL (Adjustable Speed Limitation) function in which a vehicle speed is limited at a vehicle speed limit set by a driver or lower during the ASL is set. Then, vehicle 100 includes an engine 4, a torque converter 6, an automatic transmission 8, a differential gear 10, drive wheels 12, a control device 2, a fuel injection device 14, a vehicle speed sensor 20, an accelerator pedal 22, a shift lever 24, and an ASL operator 26. Furthermore, vehicle 100 travels as a driving force generated by engine 4 as a driving source is transmitted through a transmission path including torque converter 6, automatic transmission 8 and differential gear 10 to drive wheels 12.

Engine 4 is configured to generate a driving force by combustion of fuel such as gasoline or light oil so that the driving force rotates drive wheels 12, and the output shaft thereof is coupled to torque converter 6. It is noted that although in the following description, a vehicle equipped with a gasoline engine running by gasoline fuel will be illustrated, the present invention is not limited by the kind of fuels or a structure of an engine.

Fuel injection device 14 is a device for injecting vaporized fuel into the cylinder of engine 4 and is configured such that an injection amount per unit time can be controlled according to a throttle opening degree command from control device 2.
Accordingly, engine 4 generates a driving force responsive to the throttle opening degree from control device 2. It is noted that in a case of an diesel engine not using a throttle valve for output control, a control signal for indicating a fuel injection amount in place of the throttle opening degree is used.

Torque converter 6 is arranged between engine 4 and automatic transmission 8 and converts the rotational speed and torque of the rotational driving force generated by engine 4 into desired values, which are thereafter transmitted to automatic transmission 8.

Automatic transmission 8 is arranged between torque converter 6 and differential gear 10 and transmits the driving force through one gear step according to a selected gear step command from control device 2, among a plurality of gear steps. In other words, automatic transmission 8 converts the rotational speed of the output shaft of torque converter 6 into a rotational speed corresponding to a reduction gear ratio of the selected gear step to drive differential gear 10. Therefore, a vehicle speed of vehicle 100 can be changed (shifting operation) by successively reducing or increasing the reduction gear ratio in automatic transmission 8.

Differential gear 10 transmits the driving force output from automatic transmission 8 to drive wheels 12. In addition, differential gear 10 absorbs a rotational speed difference of drive wheels 12 which is caused with traveling of vehicle 100.

Vehicle speed sensor 20 is arranged in proximity of the rotational shaft of the driven wheel (not shown) and detects and sends the vehicle speed of vehicle 100 to control device 2.

Accelerator pedal 22 is arranged under the driver's foot and sends the accelerator pedal opening degree corresponding to the depression amount of the driver to control device 2. As an example, accelerator pedal 22 contains a Hall sensor detecting the depression amount of the driver and transmits a signal detected by the sensor to control device 2.

Shift lever 24 is arranged on the side of the driver seat or at an instrument panel in front of the driver seat and is configured such that "P" (parking) range, "R" (reverse) range, "N' (neutral) range, "D" (drive) range, and the like can be selected. Then, shift lever 24 sends a shift position selected by the driver to control device 2.

ASL operator 26 is arranged on the periphery of a handle ring and allows setting and cancellation of ASL and setting of a vehicle speed limit by the driver's operation. Specifically, "ASL set" and "ASL cancel" are alternatively issued in response to a press on a set/cancel button 26a provided on one end surface of ASL operator 26. In addition, ASL operator 26 is arranged to be tiltable in the upward and downward directions on the drawing sheet and issues a command for "increasing (+)" or "decreasing (-)" the vehicle speed limit in response to a tilting operation by the driver. Then, a command signal (set/cancel and vehicle speed limit) according to such the driver's operation is transmitted to control device 2.

Control device 2 determines the throttle opening degree limit that is the maximum value of the throttle opening degree at which the vehicle speed of vehicle 100 can be kept at a vehicle speed limit set by the driver or lower, and also limits an accelerator-pedal-based throttle opening degree, which is generated according to the accelerator pedal opening degree, so as not to exceed the throttle opening degree limit. Then, control device 2 provides fuel injection device 14 with the throttle opening degree after being limited. It is noted that the accelerator-pedal-based throttle opening degree generated according to the accelerator pedal opening degree is applied as it is to fuel injection device 14 without being limited, if it is equal to or lower than the throttle opening degree limit.

In particular, control device 2 in accordance with the embodiment of the present invention calculates a temporal variation amount of the accelerator pedal opening degree by the driver's operation during ASL is set. Then, control device 2 determines whether the ASL setting should be cancelled or not, based on the temporal variation amount of the calculated accelerator pedal opening degree. More specifically, control device 2 temporarily disables the ASL setting when the temporal variation amount of the accelerator pedal opening degree exceeds a predetermined prescribed value, and control device 2 resets ASL after a predetermined prescribed time has passed since the cancellation of the ASL setting.

As described above, the ASL setting is cancelled based on the temporal variation amount of the accelerator pedal opening degree rather than on the absolute value of the accelerator pedal opening degree, so that the driver does not have to depress accelerator pedal 22 hard when temporarily cancelling the ASL setting. Therefore, production of an excessive driving force from vehicle 100 can be avoided, and the ASL setting can be cancelled safely.

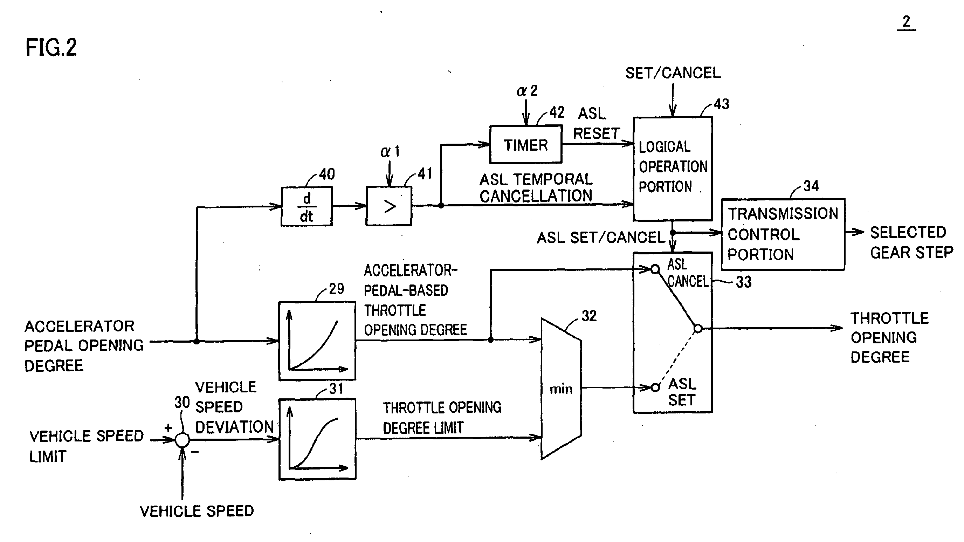

Fig. 2 is a functional block diagram showing a control structure in control device 2 in accordance with the embodiment of the present invention.

Referring to Fig. 2, the control structure of control device 2 includes a throttle opening degree characteristic storage portion 29, a subtraction portion 30, a limitation characteristic storage portion 31, and a minimum value selection portion (min) 32, and these parts realize the ASL function in cooperation with each other.

Throttle opening degree characteristic storage portion 29 stores the relation between the accelerator pedal opening degree and the accelerator-pedal-based throttle opening degree in the form of a map or the like and outputs the accelerator-pedal-based throttle opening degree associated with the accelerator pedal opening degree given according to the accelerator operation by the driver's operation.

Subtraction portion 30 calculates a vehicle speed deviation by subtracting a vehicle speed detected by vehicle speed sensor 20 from a vehicle speed limit set by the driver. Limitation characteristic storage portion 31 stores the relation between the vehicle speed deviation and the throttle opening degree limit in the form of a map or the like and determines the throttle opening degree limit, which is the maximum value of the throttle opening degree at which the vehicle speed can be kept at a vehicle speed limit or lower, according to the vehicle speed deviation output from subtraction portion 30. It is noted that the throttle opening degree limit output from limitation characteristic storage portion 31 is smaller as the vehicle speed deviation is smaller. Minimum value selection portion 32 receives the accelerator-pedal-based throttle opening degree and the throttle opening degree limit and outputs the smaller value as the throttle opening degree to fuel injection device 14 (Fig. 1) through a selection portion 33 described later.

As described above, when the throttle opening degree limit is larger than the accelerator-pedal-based throttle opening degree, the accelerator-pedal-based throttle opening degree is output as the throttle opening degree from minimum value selection portion 32, and when the accelerator-pedal-based throttle opening degree is larger than the throttle opening degree limit, the throttle opening degree limit is output as the throttle opening degree from minimum value selection portion 32. Therefore, the throttle opening degree output from minimum value selection portion 32 does not exceed the throttle opening degree limit. In this manner, when the vehicle speed of vehicle 100 approaches the vehicle speed limit, the throttle opening degree is reduced and the driving force generated from engine 4 is suppressed, so that the vehicle speed of vehicle 100 can be kept at the vehicle speed limit or lower.

Furthermore, the control structure of control device 2 further includes a temporal variation amount obtaining portion (d/dt) 40, a comparison portion 41, a timer 42, a logical operation portion 43, and selection portion 33. These parts function to control setting and cancellation of ASL.

Temporal variation amount obtaining portion 40 calculates a temporal variation amount of the accelerator pedal opening degree and outputs the same to comparison portion 41. Specifically, temporal variation amount obtaining portion 40 is formed of a differentiator or a difference unit performing an operation process at prescribed intervals and calculates how much the accelerator pedal opening degree varies per unit time.

Comparison portion 41 compares the temporal variation amount of the accelerator pedal opening degree output from temporal variation amount obtaining portion 40 with a predetermine threshold value α1, and activates the output signal when the temporal variation amount of the accelerator pedal opening degree exceeds threshold value α1. A part of the signal output from comparison portion 41 is applied as an ASL temporal cancellation command to logical operation portion 43.

Timer 42 is configured to receive a part of the signal output from comparison portion 41, and starts a time integration when the output signal from comparison portion 41 is activated, and activates the output signal when the integrated time exceeds a predetermined threshold value α2. Then, the signal output from timer 42 is applied as an ASL reset command to logical operation portion 43. It is noted that as threshold value α2, a time enough to complete the hazard avoidance by cancelling the ASL setting can be set as appropriate.

Logical operation portion 43 is a part that exercises the switching control between the ASL setting and cancellation and selects a position in selection portion 33 in response to a command signal (set/cancel) issued according to a press on set/cancel button 26a (Fig. 1) by the driver for indicating setting or cancellation of ASL. In addition, during the ASL is set, logical operation portion 43 gives an instruction to temporarily cancel (disable) the ASL setting in response to the ASL temporal cancellation command from comparison portion 41, and also gives an instruction to reset ASL, which has temporarily been cancelled, in response to the ASL reset command from timer 42.

Selection portion 33 receives the accelerator-pedal-based throttle opening degree output from throttle opening degree characteristic storage portion 29 and a signal output from minimum value selection portion 32, to output one of them as the throttle opening degree according to the ASL setting/cancellation command from logical operation portion 43. Specifically, selection portion 33 outputs a signal from minimum value selection portion 32 as the throttle opening degree during ASL is set and outputs a signal from throttle opening degree characteristic storage portion 29 as the throttle opening degree during ASL is cancelled. In other words, limitation of the throttle opening degree by selection portion 33 is effective only during ASL is set.

Furthermore, the control structure of control device 2 includes a transmission control portion 34. Transmission control portion 34 is a part that generates a selected gear step command to automatic transmission 8 (Fig. 1) and changes the shifting operation according to setting/cancellation of ASL by the driver.

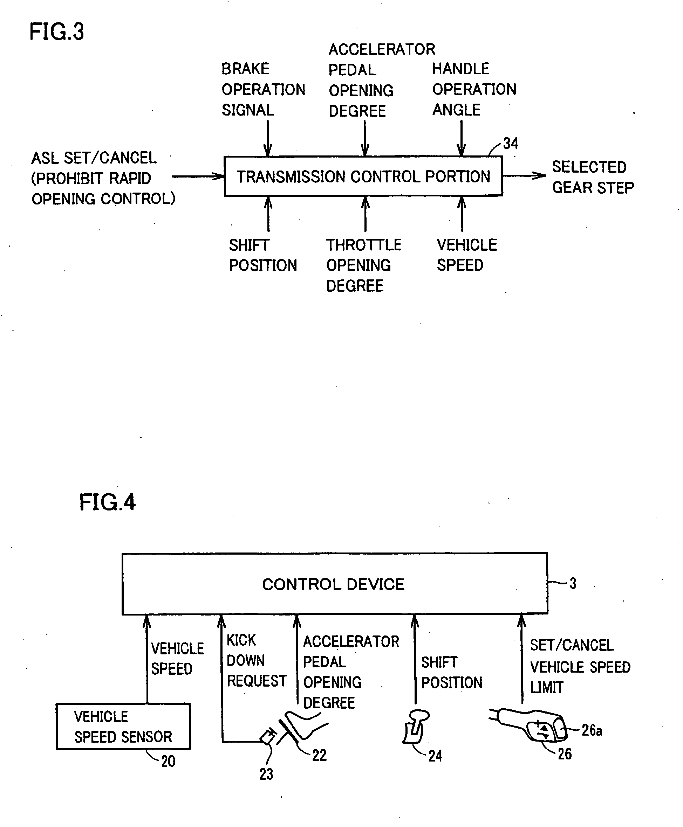

Fig. 3 is a more detailed functional block diagram of transmission control portion 34.

Referring to Fig. 3, transmission control portion 34 is configured to perform a shifting operation (generation of a selected gear step command) in accordance with a prescribed transmission control logic. Transmission control portion 34 determines a gear step that should be selected in automatic transmission 8, based on the vehicle travel conditions such as the throttle opening degree and the vehicle speed, in addition to information such as a brake operation signal, the accelerator pedal opening degree, a handle operation angle and a shift position as issued according to a driving operation by the driver.

This transmission control logic includes rapid opening accelerator control for shifting a gear step selected at present to a gear step with a larger reduction gear ratio in response to depression of accelerator pedal 22 by the driver. In other words, when the accelerator pedal opening degree is increased in connection with the depression of the accelerator pedal 22 by the driver, transmission control portion 34 determines that the driver requests acceleration of vehicle 100 and then shifts the gear step selected at present to a gear step with a larger reduction gear ratio to increase the driving force.

Here, it is also assumed that when the driver depresses accelerator pedal 22 hard during ASL is set, the rapid opening accelerator control is executed in addition to cancellation of the ASL setting. Then, in addition to the increase of the throttle opening degree followed by the cancellation of the ASL setting, a gear step with a larger gear reduction ratio is selected (downshift) in automatic transmission 8. As a result, the driving force may increase drastically. Then, in transmission control portion 34 in the embodiment of the present invention, execution of the rapid opening control is stopped at least during ASL is set. Here, in addition to during ASL is set, execution of the rapid opening accelerator control may maintain to be stopped until a prescribed time has passed since the ASL setting was cancelled.

The ASL setting cancellation operation in accordance with the embodiment of the present invention will be described below in comparison with a prior art.

Fig. 4 is a schematic configuration diagram showing a control device in accordance with a prior art.

Referring to Fig. 4, a control device 3 in accordance with a prior art further includes a kick down switch 23, as compared with control device 2 in accordance with the present embodiment shown in Fig. 1. Kick down switch 23 essentially functions to cause a downshift in automatic transmission 8 (Fig. 1) to increase the torque generation amount at the drive wheels, for example, when a vehicle speed is intended to be increased, and also functions to give an instruction to temporarily cancel the ASL setting in the prior art shown in Fig. 4. In other words, the ASL setting is temporarily cancelled by the driver depressing accelerator pedal 22 to the position of kick down switch 23 during ASL setting.

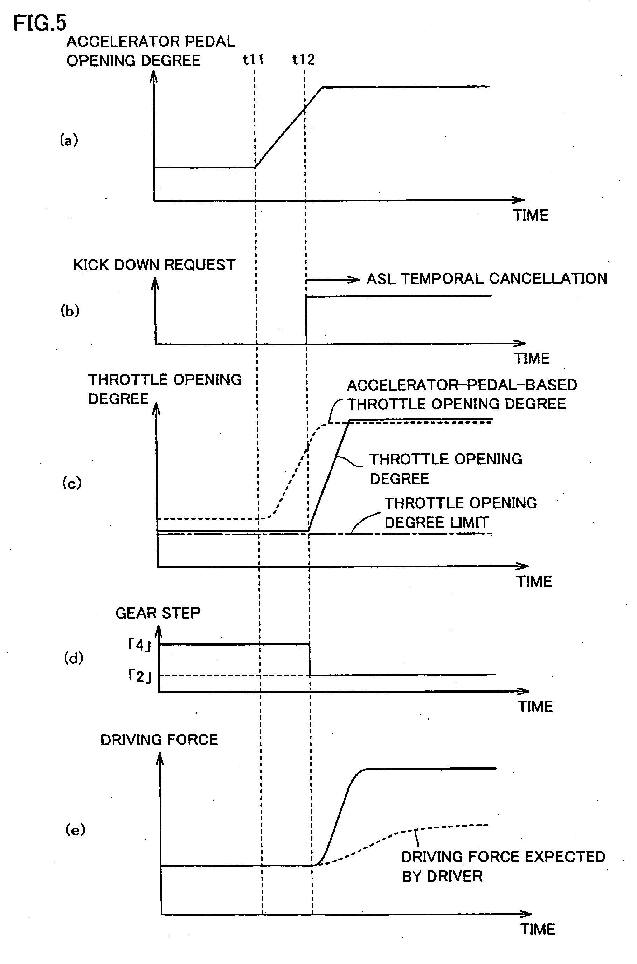

Fig. 5 is a time waveform showing the ASL setting cancellation operation in accordance with the prior art.

Fig. 5(a) shows a time transition of the accelerator pedal opening degree. Fig. 5(b) shows a time transition of a kick down request. Fig. 5(c) shows a time transition of the throttle opening degree. Fig. 5(d) shows a time transition of the selected gear step. Fig. 5(e) shows a time transition of the produced driving force.

Referring to Fig. 5(a), as an example, it is assumed that the driver starts depressing accelerator pedal 22 hard at time t11 during ASL setting to temporarily cancel the ASL setting. Then, when accelerator pedal 22 is depressed to the position of kick down switch 23 at time t12, a kick down request is produced from kick down switch 23 (Fig. 5(b)), so that the ASL setting is temporarily cancelled.

As shown in Fig. 5(c), the throttle opening degree which has been limited to the throttle opening degree limit increases rapidly by the cancellation of the ASL setting until it reaches the accelerator-pedal-based throttle opening degree (after time t12). At the same time, as shown in Fig. 5(d), due to the production of the kick down request, the gear step in automatic transmission 8 (Fig. 1) is downshifted, for example, from "4" (low reduction gear ratio side) to "2" (high reduction gear ratio side).

As a result of the rapid increase of the throttle opening degree and the downshift, as shown in Fig. 5(e), an excessive driving force is produced in vehicle 100. This driving force is extremely larger than the amount expected by the driver. Therefore, it is likely that acceleration may be caused against the driver's intention.

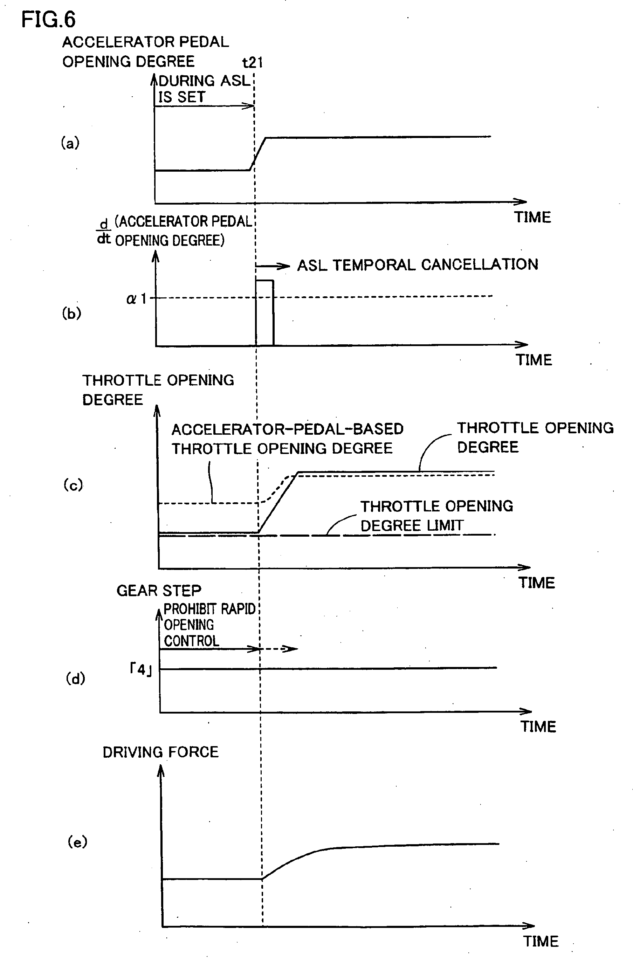

Fig. 6 is a time waveform showing the ASL setting cancellation operation in accordance with the embodiment of the present invention.

Fig. 6(a) shows a time transition of the accelerator pedal opening degree. Fig. 6(b) shows a time transition of a temporal transition amount of the accelerator pedal opening degree. Fig. 6(c) shows a time transition of the throttle opening degree. Fig. 6(d) shows a time transition of the selected gear step. Fig. 6(e) shows a time transition of the produced driving force.

Referring to Fig. 6(a), similarly to Fig. 5(a), during ASL setting, it is assumed that the driver starts depressing accelerator pedal 22 at time t21 to temporarily cancel the ASL setting. Here, when the depression of accelerator pedal 22 by the driver causes the temporal variation amount of the accelerator pedal opening degree to exceed threshold value α1, comparison portion 41 (Fig. 2) issues the ASL temporal cancellation (Fig. 6(b)). Accordingly, the ASL setting is temporarily cancelled.

As shown in Fig. 6(c), with the cancellation of the ASL setting, the throttle opening degree which has been limited to the throttle opening degree limit increases until it reaches the accelerator-pedal-based throttle opening degree (after time t21). However, since the absolute value of the depression amount of accelerator pedal 22 by the driver is relatively small, the increase amount of the throttle opening degree between before and after the ASL cancellation is small as compared with the case in Fig. 5(c). Furthermore, as shown in Fig. 6(d), at least for a period of time during which ASL is set, execution of the rapid opening accelerator control is stopped, so that the gear step is kept at "4." Here, the period of time during which execution of the rapid opening accelerator control is stopped may be extended until a prescribed period of time has passed since the ASL setting was cancelled.

In this manner, since the increase amount of the throttle opening degree is relatively small and the gear step is kept, the driving force generated in vehicle 100 increases gently. Therefore, a driving force can be generated by the required amount according to the driver's intention.

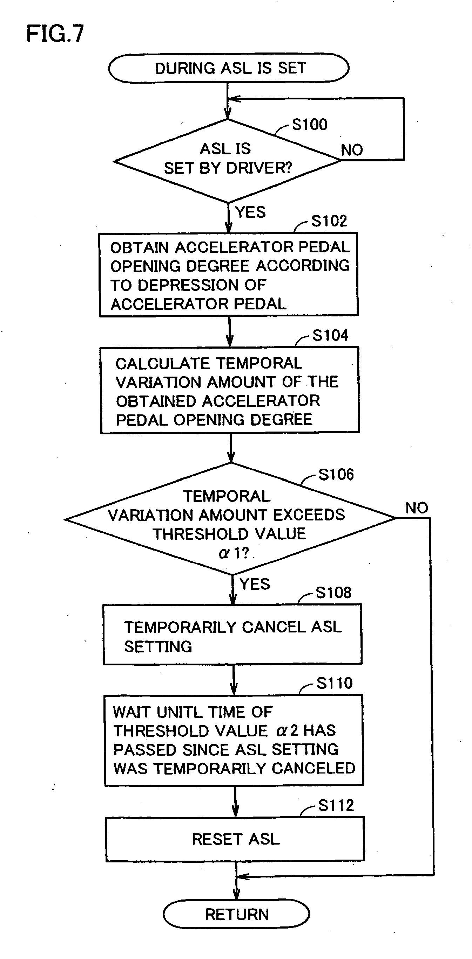

Fig. 7 is a flowchart concerning the ASL setting cancellation operation in accordance with the embodiment of the present invention.

Referring to Fig. 7, control device 2 determines whether or not ASL is set by the driver (step S100). If ASL is not set (NO in step S100), control device 2 waits until ASL is set (step S100).

If ASL is set (YES in step S100), control device 2 obtains the accelerator pedal opening degree according to the depression of accelerator pedal 22 by the driver (step S102). Then, control device 2 calculates a temporal variation amount of the obtained accelerator pedal opening degree (step S 104) and determines whether or not the calculated temporal variation amount exceeds threshold value α1 (step 106). If the temporal variation amount does not exceed threshold value α1 (NO in step S106), control device 2 returns to the initial step.

If the temporal variation amount exceeds threshold value α1 (YES in step S106), control device 2 temporarily cancels the ASL setting (step S108), and in addition, waits until a time of threshold value α2 has elapsed since the ASL setting was temporarily cancelled (step S110). When the time of threshold value α2 passed, control device 2 sets ASL again (step S 112). Then, the process returns to the initial step.

As for the correspondence between this embodiment and the invention of this application, engine 4 corresponds to "driving force source." Then, accelerator pedal 22 realizes "operation amount obtaining means," throttle opening degree characteristic storage portion 29 realizes "command value generation means," vehicle speed sensor 20 realizes "vehicle speed obtaining means," subtraction portion 30, limitation characteristic storage portion 31 and minimum value selection portion 32 realize "limitation means," temporal variation amount obtaining portion 40 realizes "variation amount obtaining means," comparison portion 41, logical operation portion 43 and selection portion 33 realize "disabling means," timer 42 or distance integration portion 44 realizes "re-enabling means," and transmission control portion 34 realizes "transmission control means."

In accordance with the embodiment of the present invention, during ASL is set, the throttle opening degree generated according to the accelerator pedal opening degree caused by the accelerator operation by the driver is limited so as not to exceed the throttle opening degree limit. At the same time, it is determined whether or not the ASL setting is to be cancelled, based on the temporal variation amount of the accelerator pedal opening degree. Therefore, the driver can cancel the ASL setting only by depressing the accelerator pedal at a prescribed rate, so that it is not necessary to depress the accelerator pedal more than necessary. Thus, production of an excessive driving force at the time of cancellation of the ASL setting can be avoided, so that ASL can be cancelled more safely.

In addition, in accordance with the embodiment of the present invention, after the ASL setting is temporarily cancelled, when a prescribed period of time passed, ASL is reset. Therefore, the original ASL setting state can be restored without requiring the driver for any operation.

### [First Modification]

In the embodiment of the present invention as described above, such a configuration has been described in that ASL is reset after the elapse of a prescribed time since temporal cancellation of ASL setting. In place of this configuration, ASL may be reset after the vehicle travels a prescribed distance after temporal cancellation of ASL setting.

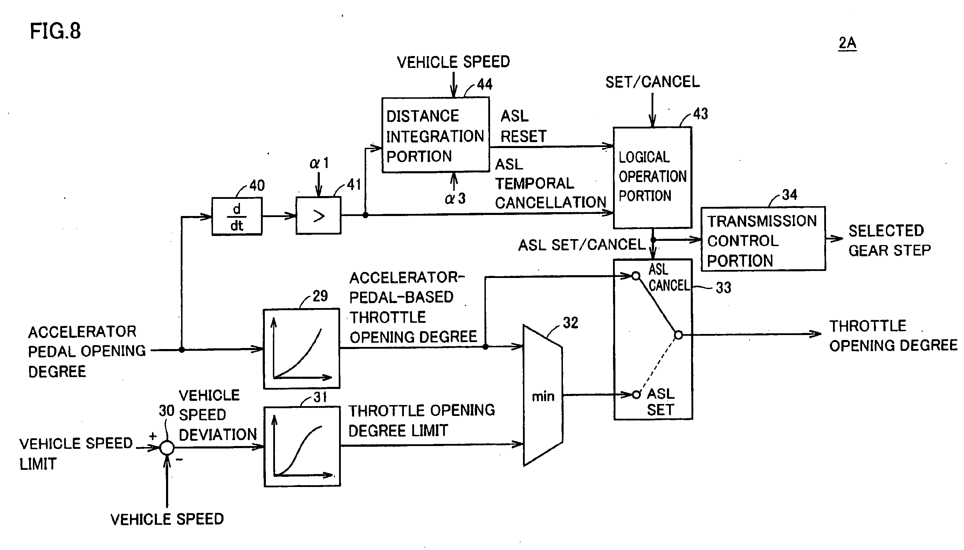

Fig. 8 is a functional block diagram showing a control structure in a control device 2A in accordance with a first modification of the embodiment of the present invention.

Referring to Fig. 8, the control structure of control device 2A includes a distance integration portion 44 in place of timer 42 in the control structure of control device 2 in accordance with the first embodiment of the present invention as shown in Fig. 2.

Distance integration portion 44 is configured to receive a vehicle speed from vehicle speed sensor 20 (Fig. 1) and also receive a part of the signal output from comparison portion 41. Then, distance integration portion 44 starts integration of the travel distance of the vehicle when the output signal from comparison portion 41 is activated, and then activates the output signal when the integrated travel distance exceeds a predetermined threshold value α3. Then, the signal output from distance integration portion 44 is applied to logical operation portion 43 as an ASL reset command. It is noted that as threshold value α3, a distance enough to complete hazard avoidance by cancelling the ASL setting is set as appropriate.

The other configuration is similar to that of the embodiment of the present invention as described above and therefore the detailed description will not be repeated.

In accordance with the first modification of the embodiment of the present invention, a condition for resetting the ASL setting after the cancellation thereof can be set based on a travel distance, thereby enabling more flexible condition setting.

### [Second Modification]

In the embodiment of the present invention as described above, such a configuration has been described in that whether the ASL setting is to be cancelled or not is determined only based on a temporal variation amount of the accelerator pedal opening degree. In addition to this condition, the determination may be made based on the absolute value of the accelerator pedal opening degree.

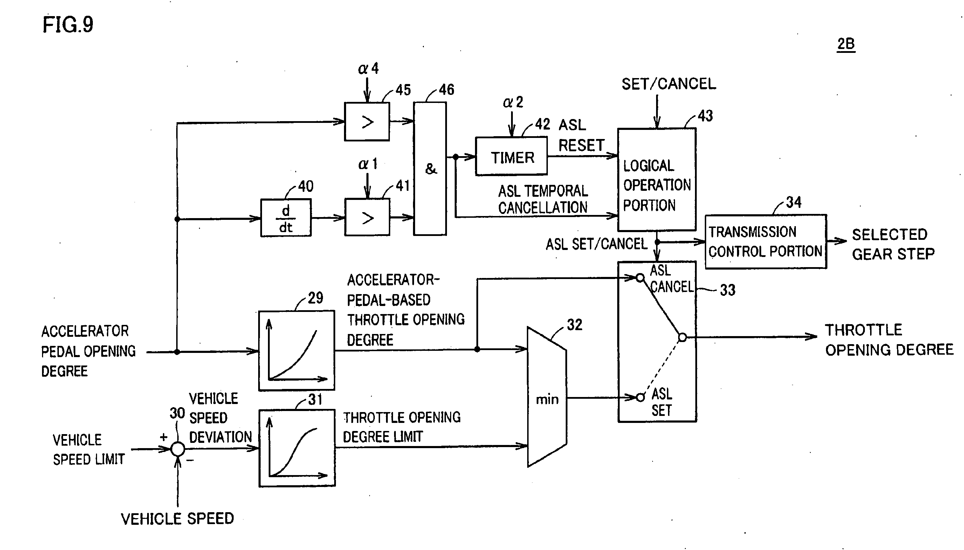

Fig. 9 is a functional block diagram showing a control structure in a control device 2B in accordance with a second modification of the embodiment of the present invention.

Referring to Fig. 9, the control structure of control device 2B further includes a comparison portion 45 and an AND portion 46 in the control structure of control device 2 in accordance with the first embodiment of the present invention as shown in Fig. 2.

Comparison portion 45 compares the accelerator pedal opening degree with a predetermined threshold value α4, and activates the output signal when the accelerator pedal opening degree exceeds threshold value α4. The signal output from comparison portion 45 is applied to AND portion 46.

If the signals output from comparison portion 41 and comparison portion 45 are both in the activated state, AND portion 46 applies an ASL temporal cancellation command to logical operation portion 43 and timer 42.

The other configuration is similar to that of the embodiment of the present invention as described above and therefore the detailed description will not be repeated.

In accordance with the second modification of the embodiment of the present invention, a situation in which the ASL setting is unnecessarily cancelled can be avoided, for example, in an acceleration state in which the vehicle speed is not yet reached the vehicle speed limit of the ASL setting.

It is noted that in the embodiment of the present invention and the modifications thereof, the ASL setting is temporarily cancelled by the accelerator operation by the driver in a period of time during which ASL is set, and the ASL setting is reset under a prescribed condition. However, the ASL setting may be cancelled completely. In other words, after the ASL setting is cancelled by the accelerator operation by the driver, ASL may be configured not to be reset as long as the driver does not operate the ASL operator.

Although the present invention has been described and illustrated in detail, it is clearly understood that the same is by way of illustration and example only and is not to be taken by way of limitation, the scope of the present invention being interpreted by the terms of the appended claims.

## Claims

1. A control device (2, 2A, 2B) of a vehicle (100),
said vehicle (100) including a driving force source (4) that can produce a driving force in response to a command value from said control device (2, 2A, 2B),
said control device (2, 2A, 2B) comprising:
operation amount obtaining means (22) for obtaining an accelerator operation amount by a driver;
command value generation means (29) for generating said command value according to said accelerator operation amount obtained by said operation amount obtaining means (22);
limitation means (30, 31, 32) for determining a limit value which is a maximum value of said command value at which a vehicle speed of said vehicle (100) can be kept at a vehicle speed limit set by said driver or lower, and limiting said command value applied to said driving force source (4) so as not to exceed said limit value;
variation amount obtaining means (40) for obtaining a temporal variation amount of said accelerator operation amount obtained by said operation amount obtaining means (22);
disabling means (41, 43, 33) for disabling said limitation means (30, 31, 32) based on said temporal variation amount of said accelerator operation amount obtained by said variation amount obtaining means (40); **characterised in that**
said vehicle (100) further includes a transmission (8) arranged in a motive power transmission path from said driving force (4) for transmitting a driving force through one gear step selected from a plurality of gear steps.
said control device (2, 2A, 2B) further comprises transmission control means (34) performing transmission control for selecting a gear step in said transmission (8), at least based on said accelerator operation amount, and
said transmission control means (34) is configured to perform rapid opening control of shifting a gear step selected at present to a gear step with a larger reduction gear ratio in response to an increase of said accelerator operation amount, and is configured to stop execution of said rapid opening control at least for a period of time during which said limitation means (30, 31, 32) is enabled.

2. The control device according to claim 1, wherein said disabling means (41, 43, 33) disables said limitation means (30, 31, 32) when said temporal variation amount of said accelerator operation amount exceeds a predetermined first prescribed value.

3. The control device according to claim 2, wherein said disabling means (41, 43, 33) disables said limitation means (30, 31, 32) when said accelerator operation amount exceeds a predetermined second prescribed value, in addition to said temporal variation amount exceeding said first prescribed value.

4. The control device according to any one of claims 1 to 3, wherein said control device (2, 2A, 2B) further comprises re-enabling means (42, 44) for enabling said limitation means (30, 31, 32) again after said limitation means (30, 31, 32) is disabled by said disabling means (41, 43, 33).

5. The control device according to claim 4, wherein said re-enabling means (42) enables said limitation means (30, 31, 32) again after a predetermined prescribed time has passed since said limitation means (30, 31, 32) was disabled by said disabling means (41, 43, 33).

6. The control device according to claim 4, wherein said re-enabling means (44) enables said limitation means again after said vehicle (100) travels a predetermined prescribed distance after said limitation means (30, 31, 32) is disabled by said disabling means (41, 43, 33).

## Patentansprüche

1. Steuervorrichtung (2, 2A, 2B) für ein Fahrzeug (100),
wobei das Fahrzeug (100) eine Antriebskraftquelle (4) beinhaltet, die eine Antriebskraft in Reaktion auf einen Befehlswert von der Steuervorrichtung (2, 2A, 2B) erzeugen kann,
wobei die Steuervorrichtung (2, 2A, 2B) aufweist:
eine Verstellweg-Erhalteeinrichtung (22) zum Erhalten eines Fahrpedalverstellwegs durch einen Fahrer;
eine Befehlswert-Erzeugungseinrichtung (29) zum Erzeugen des Befehlswerts gemäß dem Fahrpedalverstellweg, der durch die Verstellweg-Erhalteeinrichtung (22) erhalten wird;
eine Begrenzungseinrichtung (30, 31, 32) zum Bestimmen eines Grenzwerts, bei dem es sich um einen maximalen Wert des Befehlswerts handelt, bei dem eine Fahrzeuggeschwindigkeit des Fahrzeugs (100) bei einer Fahrzeuggeschwindigkeitsgrenze, die durch den Fahrer eingestellt wird, oder darunter gehalten werden kann, und zum Begrenzen des Befehlswerts, der auf die Antriebskranquelle (4) angewendet wird, so dass der Grenzwert nicht überschritten wird;
eine Variationsbetrags-Erhalteeinrichtung (40) zum Erhalten eines vorübergehenden Variationsbetrags des Fahrpedalverstellwegs, der durch die Verstellweg-Erhalteeinrichtung (22) erhalten wird;
eine Deaktivierungseinrichtung (41, 43, 33) zum Deaktivieren der Begrenzungseinrichtung (30, 31, 32) basierend auf dem vorübergehenden Variationsbetrag des Fahrpedalverstellwegs, der durch die Variationsbetrags-Erhalteeinrichtung (40) erhalten wird; **dadurch gekennzeichnet, dass**
das Fahrzeug (100) ferner ein Getriebe (8) beinhaltet, das in einem Antriebsleistungsübertragungsweg von der Antriebskraftquelle (4) zum Übertragen einer Antriebskraft über eine von einer Mehrzahl von Gangstufen ausgewählte Gangstufe angeordnet ist,
wobei die Steuervorrichtung (2, 2A, 2B) ferner eine Getriebesteuereinrichtung (34) aufweist, die eine Getriebesteuerung zum Auswählen einer Gangstufe in dem Getriebe (8), zumindest basierend auf dem Fahrpedalverstellweg, ausführt, und
die Getriebesteuereinrichtung (34) konfiguriert ist, um eine Schnellöffnungsteuerung zum Schalten einer zu dem gegenwärtigen Zeitpunkt ausgewählten Gangstufe auf eine Gangstufe mit einem höheren Untersetzungsgetriebeverhältnis in Reaktion auf eine Vergrößerung des Fahrpedalverstellwegs auszuführen, und konfiguriert ist, um eine Ausführung der Schnellöffnungssteuerung zumindest für eine Zeitspanne zu unterbrechen, während der die Begrenzungseinrichtung (30, 31, 32) aktiviert ist.

2. Steuervorrichtung nach Anspruch 1, wobei die Deaktivierungseinrichtung (41, 43, 33) die Begrenzungseinrichtung (30, 31, 32) deaktiviert, wenn der vorübergehende Variationsbetrag des Fahrpedalverstellwegs einen vorbestimmten ersten vorgeschriebenen Wert überschreitet.

3. Steuervorrichtung nach Anspruch 2, wobei die Deaktivierungseinrichtung (41, 43, 33) die Begrenzungseinrichtung (30, 31, 32) deaktiviert, wenn, abgesehen davon, dass der vorübergehende Variationsbetrag den ersten vorgeschriebenen Wert überschreitet, der Fahrpedalverstellweg einen vorbestimmten zweiten vorgeschriebenen Wert überschreitet.

4. Steuervorrichtung nach einem der Ansprüche 1 bis 3, wobei die Steuervorrichtung (2, 2A, 2B) ferner eine Reaktivierungseinrichtung (42, 44) zum erneuten Aktivieren der Begrenzungseinrichtung (30, 31, 32) aufweist, nachdem die Begrenzungseinrichtung (30, 31, 32) durch die Deaktivierungseinrichtung (41, 43, 33) deaktiviert worden ist.

5. Steuervorrichtung nach Anspruch 4, wobei die Reaktivierungseinrichtung (42) die Begrenzungseinrichtung (30, 31, 32) erneut aktiviert, nachdem eine vorbestimmte vorgeschriebenen Zeit verstrichen ist, seitdem die Begrenzungseinrichtung (30, 31, 32) durch die Deaktivierungseinrichtung (41, 43, 33) deaktiviert wurde.

6. Steuervorrichtung nach Anspruch 4, wobei die Reaktivierungseinrichtung (44) die Begrenzungseinrichtung erneut aktiviert, nachdem das Fahrzeug (100) eine vorbestimmte vorgeschriebene Entfernung zurückgelegt hat, nachdem die Begrenzungseinrichtung (30, 31, 32) durch die Deaktivierungseinrichtung (41 43, 33) deaktiviert worden ist.

## Revendications

1. Dispositif de commande (2, 2A, 2B) d'un véhicule (100),
ledit véhicule (100) comprenant une source de force motrice (4) qui peut produire une force motrice en réponse à une valeur de commande provenant dudit dispositif de commande (2, 2A, 2B),
ledit dispositif de commande (2, 2A, 2B) comprenant :
un moyen d'obtention (22) de degré d'actionnement pour obtenir un degré d'actionnement, d'un accélérateur par un conducteur,
un moyen de génération (29) de valeur de commande destiné à générer ladite valeur de commande selon ledit degré d'actionnement de l'accélérateur obtenu par ledit moyen d'obtention (22) de degré d'actionnement ;
un moyen de limitation (30, 31, 32) destiné à déterminer une valeur limite qui représente la valeur maximale de ladite valeur de commande à laquelle la vitesse dudit véhicule (100) peut être maintenue à une vitesse limite du véhicule fixée par ledit conducteur ou moins, et à limiter ladite valeur de commande appliquée à ladite source de force motrice (4) de sorte que ladite valeur limite ne soit pas dépassée ;
un moyen d'obtention (40) de grandeur de variation destiné à obtenir une grandeur de variation temporelle dudit degré d'actionnement de l'accélérateur obtenu par ledit moyen d'obtention (22) de degré d'actionnement ;
un moyen de désactivation (41, 43, 33) destiné à désactiver ledit moyen de limitation (30, 31, 32) sur la base de ladite grandeur de variation temporelle dudit degré d'actionnement de l'accélérateur obtenu par ledit moyen d'obtention (40) de la grandeur de variation ; **caractérisé en ce que**
ledit véhicule (100) comprend en outre une transmission (8) agencée dans un chemin de transmission de force motrice de ladite force motrice (4) pour transmettre une force motrice par un seul rapport de vitesse sélectionné parmi une pluralité de rapports de vitesse,
ledit dispositif de commande (2, 2A, 2B) comporte en outre un moyen de commande de transmission (34) qui effectue une commande de transmission pour sélectionner un rapport de vitesse dans ladite transmission (8), au moins sur la base dudit degré d'actionnement de l'accélérateur, et
ledit moyen de commande de transmission (34) est configuré pour effectuer une commande d'ouverture rapide de changement d'un rapport de vitesse sélectionné actuellement à un rapport de vitesse avec un rapport de réduction de vitesse plus important en réponse à une augmentation dudit degré d'actionnement de l'accélérateur, et est configuré pour arrêter l'exécution de ladite commande d'ouverture rapide au moins pendant une durée pendant laquelle ledit moyen de limitation (30,31,32) est activé.

2. Dispositif de commande selon la revendication 1, dans lequel ledit moyen de désactivation (41, 43, 33) désactive ledit moyen de limitation (30, 31, 32) lorsque ladite grandeur de variation temporelle dudit degré d'actionnement de l'accélérateur dépasse une première valeur prescrite prédéterminée.

3. Dispositif de commande selon la revendication 2, dans lequel ledit moyen de désactivation (41, 43, 33) désactive ledit moyen de limitation (30, 31, 32) lorsque ledit degré d'actionnement de l'accélérateur dépasse une deuxième valeur prescrite prédéterminée, et que ladite grandeur de variation temporelle dépasse ladite première valeur prescrite.

4. Dispositif de commande selon l'une quelconque des revendications 1 à 3, dans lequel ledit dispositif de commande (2, 2A, 2B) comporte en outre un moyen de réactivation (42, 44) pour activer ledit moyen de limitation (30, 31, 32) de nouveau après la désactivation dudit moyen de limitation (30, 31, 32) par ledit moyen de désactivation (41, 43, 33).

5. Dispositif de commande selon la revendication 4, dans lequel ledit moyen de réactivation (42) permet d'activer ledit moyen de limitation (30, 31, 32) de nouveau après qu'une durée prescrite prédéterminée s'est écoulée depuis la désactivation dudit moyen de limitation (30, 31, 32) par ledit moyen de désactivation (41, 43, 33).

6. Dispositif de commande selon la revendication 4, dans lequel ledit moyen de réactivation (44) permet l'activation dudit moyen de limitation de nouveau après que ledit véhicule (100) a parcouru une distance prescrite prédéfinie, après la désactivation dudit moyen de limitation (30, 31, 32) par ledit moyen de désactivation (41, 43, 33).
